# EUROPEAN PATENT SPECIFICATION

(11) **EP 1 734 673 B1**
(45) Date of publication and mention of the grant of the patent: **19.12.2018**
(21) Application number: 04738253.6
(22) Date of filing: 18.06.2004
(51) Int. Cl.: H04B 10/00, H04J 14/02

(54) **CAPACITY EXPANSION METHOD FOR OPTICAL TRANSMISSION LINK NETWORK WITHOUT SERVICE INTERRUPTION**
KAPAZITÄTSERWEITERUNGSVERFAHREN FÜR EIN OPTISCHES ÜBERTRAGUNGSSTRECKENNETZ OHNE DIENSTUNTERBRECHUNG
PROCEDE D'AUGMENTATION DE LA CAPACITE D'UN RESEAU DE VOIES DE TRANSMISSION OPTIQUE SANS INTERRUPTION DE SERVICE

(30) Priority: 09.04.2004 CN 200410030888
(43) Date of publication of application: 20.12.2006
(73) Proprietor: ZTE Corporation, Shenzhen 518057 (CN)
(72) Inventor: SUN, Desheng, Shenzhen, Guangdong 518057 (CN)
(74) Representative: Novagraaf Technologies
(86) International application number: PCT/CN2004/000655
(87) International publication number: WO 2005/099134

(56) References cited:
- EP-A1- 1 389 843
- EP-A1- 1 389 843
- EP-A2- 1 088 437
- WO-A1-97/42729
- CN-A- 1 327 328
- CN-A- 1 466 302
- CN-A- 1 467 930
- US-A1- 2003 223 359
- DAVID GRIFFITH: "Dynmaic Expansion of M:N Protection Groups in GMPLS Optical Networks", INTERNATIONAL CONFERENCE ON PARALLEL PROCESSING WORKSHOPS, 21 August 2002 (2002-08-21), XP055082274,

## Description

### FIELD OF THE INVENTION

The present invention relates to the field of optical transmission communications, in particular, to a capacity expansion method for optical transmission network.

### BACKGROUND OF THE INVENTION

At present, the optical transmission link network is already widely used in the field of telecommunications. The International Telecommunications Union's Proposal No. ITU-TG.841 "The Categorization and Characteristics of SDH Network Protection Structure" provided detailed description over the function of self-repair of SDH/SONET optical transmission link network, wherein multiplexed segment link 1+1 protection or 1:N protection is the major method of self-repair of the link network.

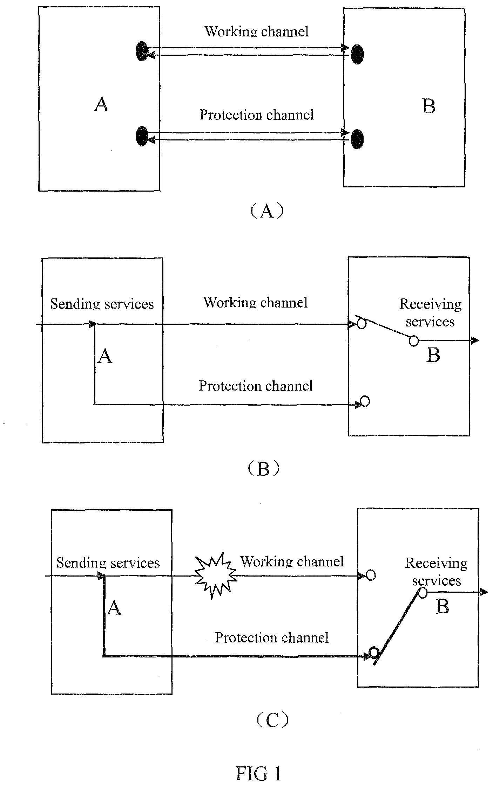

FIG. 1 is a principle schematic diagram of the multiplexed segment link 1+1 protection. Normally, the service between a network element A and a network element B is simultaneously transmitted in the working channel and the protection channel, while the network element will determine the service shall be received from which channel of the two as is shown in (A); the (B) of FIG. 1 shows the transmission and receipt of service from the network element A to the network element B, the service sent by the network element A is fed simultaneously in the working channel and the protection channel, and the network element B chooses to receive the service from the working channel; the (C) is the schematic diagram illustrating the case where there is fault in the working channel from the network element A to the network element B, and the network element B rearranges to the protection channel to receive the service sent from network element A to B.

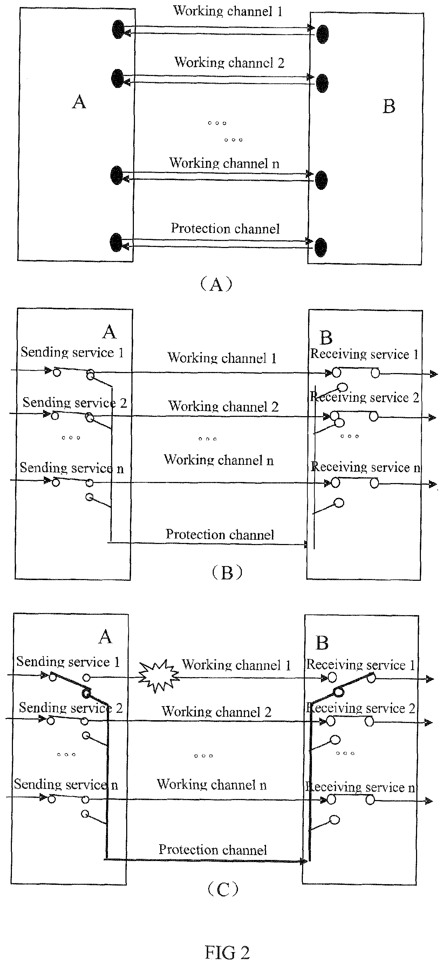

FIG. 2 is a principle schematic diagram of the multiplexed segment link 1:N protection method. The services are transmitted through N working channels and a protection channel configured between a network element A and a network element B, as is shown by (A). Normally, the protection channel between the network element A and the network element B serves as a backup channel or serves to transmit additional services; when there is fault in the working channel, this protection channel is used to carry the services of the working channel in fault. The (B) of FIG. 2 shows the transmission and receipt of services between the network element A and the network element B, where the services are transmitted through N working channels from network element A to network element B, and network element B receives the corresponding services from each working channel. The (C) of FIG. 2 is a schematic diagram illustrating when there is fault in No. 1 working channel between the network element A and the network element B, the service originally transmitted by No. 1 working channel is sent to the protection channel by the network element A, and the network element B rearranges to receive service from the protection channel.

The multiplexed segment link protection is mainly applied to optical transmission network where the physical topology is link, and is particularly applied more often to networks whose speed is 155M, 622M, etc, and in recently years, it is also sometimes applied to high-speed network, such as whose speed is 2.5G.

It can be seen from patent documents such as Chinese patent applications Nos. 02108373.8, 99126249.2, 00119485.2, 00122430.1, and US patent No. 6,259, 676 that to achieve the smooth upgrading or the capacity expansion without service interruption for network has drawn wide attention in the fields of density wavelength division multiplexed (DWDM), exchange, radio communications, data communications, etc.

In the field of optical transmission, due to the ever-increasing services of SDH/SONET network, the capacity expansion through increasing network element occurs from time to time. In order to guarantee the normal transmission of services, the service provider usually demands that there should be no service interruption during the period of capacity expansion of network. Although there is already solution for providing capacity expansion without service interruption in the prior art for multiplexed segment ring network, there is not yet any disclosed method for providing capacity expansion without service interruption for link network by now. While in fact, the capacity expansion by adding network element or change the original relay network element also happens to link network often, especially for high-speed network, such as 2.5G, etc., the capacity expansion without service interruption is particularly important. D1 (US-A-20030223359) provided related technical solutions; however, the above mentioned problem still remains unsolved.

### SUMMARY OF THE INVENTION

The objective of the present invention is to provide a capacity expansion method for optical transmission link network without service interruption, so as to accomplish the capacity expansion of link network without service interruption.

The core idea of the present invention is: based on the features of multiplexed segment link protection, configuring the service time slots of a new added network element in advance, and rearranging the service of the working channel to the protection channel, then reconfiguring the optical fibers of the working channel to the new added network element, then rearranging the service of the protection channel to the working channel, and at the end reconfiguring the optical fibers of the protection channel to the new added network element, and thus completing the capacity expansion upgrade in steps.

The present invention provides a capacity expansion method for optical transmission link network without service interruption, comprising:
Step 1: according to the demands of capacity expansion, determining the connection relationships of optical fibers between the new added network element and the two neighboring network elements in the segment for capacity expansion;
Step 2: according to the transmission relationship of the optical fiber services of the segment for capacity expansion, configuring the service time slots of the new added network element, and then distributing to the new added network element;
Step 3: rearranging the service transmitted in a working channel in the segment for capacity expansion to the protection channel;
Step 4: after confirming that the rearrangement is finished correctly, reconfiguring the optical fiber of the working channel where the service rearrangement is conducted into the optical connection composed of the new added network element and the two neighboring network elements, which forms the new working channel;
Step 5: rearranging the service of the protection channel to the new working channel;
Step 6: in case the link network adopts the multiplexed segment 1:N protection and N>1, repeatedly performing Step 3 to Step 5 on other working channel until these steps have been performed on all the working channels;
Step 7: reconfiguring the optical fiber of the protection channel to the optical connection composed of the new added network element and the two neighboring network elements;
Step 8: according to the connection relationship between the new added network element and the neighboring network element, conducting the protection configuration and other relevant configuration for the new added network element.

Wherein, the above Step 8 "conducting the protection configuration and other relevant configuration for the new added network element" can also be completed before Step 3, therefore, the technical solution of the present invention may also be:
A capacity expansion method for optical transmission link network without service interruption, comprising:
Step 1: according to the demands of capacity expansion, determining the connection relationships of optical fibers between the new added network element and the two neighboring network elements in the segment for capacity expansion;
Step 2: according to the transmission relationship of the optical fiber services of the segment for capacity expansion, configuring the service time slots of the new added network element, and then distributing to the new added network element;
Step 3: according to the connection relationship between the new added network element and the neighboring network element, conducting the protection configuration and other relevant configuration for the new added network element;
Step 4: rearranging the service transmitted in a working channel in the segment for capacity expansion to the protection channel;
Step 5: after confirming that the rearrangement if finished correctly, reconfiguring the optical fiber of the working channel where the service rearrangement is conducted into the optical connection composed of the new added network element and the two neighboring network elements, which forms the new working channel;
Step 6: rearranging the service of the protection channel to the new working channel;
Step 7: in case the link network adopts the multiplexed segment 1:N protection and N>1, repeatedly performing Step 4 to Step 6 on other working channel until these steps have been performed on all the working channels ;
Step 8: reconfiguring the optical fiber of the protection channel to the optical connection composed of the new added network element and the two neighboring network elements.

From the above technical solution, it can be learnt that in the whole capacity expansion process of the working channel, the optical fibers where the protection channel is located maintain the connecting mode of the original segment all the time for protecting the services carried by the original working channel; although there are times of optical fiber interruption during the optical fiber reconfiguration period, the service has already been rearranged to the protection channel, so that the service is not interrupted. In addition, the service time slots configuration of the new added network element has been done and transmitted down before the service rearrangement begins, thus the service is also not interrupted after the service is rearranged to working channel. Therefore, with the present invention, it is possible to accomplish the capacity expansion for the optical transmission link network without the service interruption, and the operational process is simple and effective.

### BRIEF DESCRIPTION OF THE DRAWINGS

FIG. 1 is a principle schematic diagram of the multiplexed segment link 1+1 protection mode;
FIG. 2 is a principle schematic diagram of the multiplexed segment link 1:N protection mod;
FIG. 3 is a schematic diagram of adding new network element into the link network protected by the multiplexed segment link;
FIG. 4 is a schematic diagram of the capacity expansion of link network with the multiplexed segment link 1+1 protection mode;

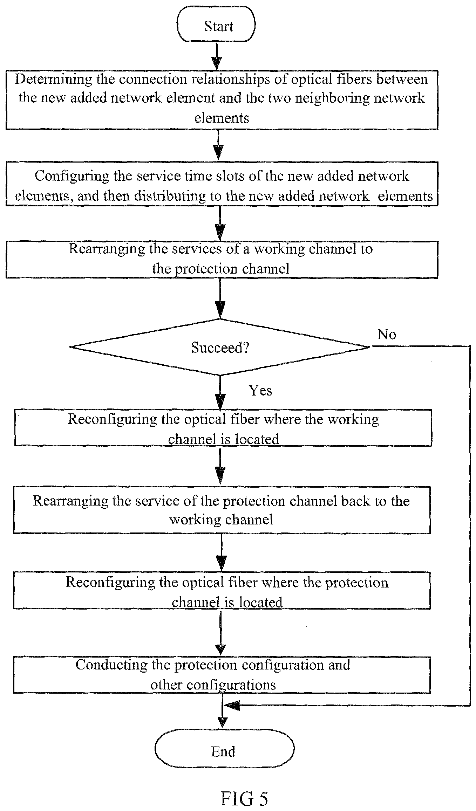

FIG. 5 is a flow chart of the capacity expansion of link network with the multiplexed segment link 1+1 protection;
FIG. 6A and FIG. 6B are schematic diagrams of the capacity expansion of link network with the multiplexed segment link 1:N protection mode;
FIG. 7 is a flow chart of the capacity expansion of link network with the multiplexed segment link 1:N protection mode.

### DETAILED DESCRIPTION OF THE PREFERRED EMBODIMENT

Hereunder the invention will be further described in detail with the figures and embodiments.

FIG. 1 and FIG. 2 have been described in the part of the Background of the Invention, so it will not be repeated here.

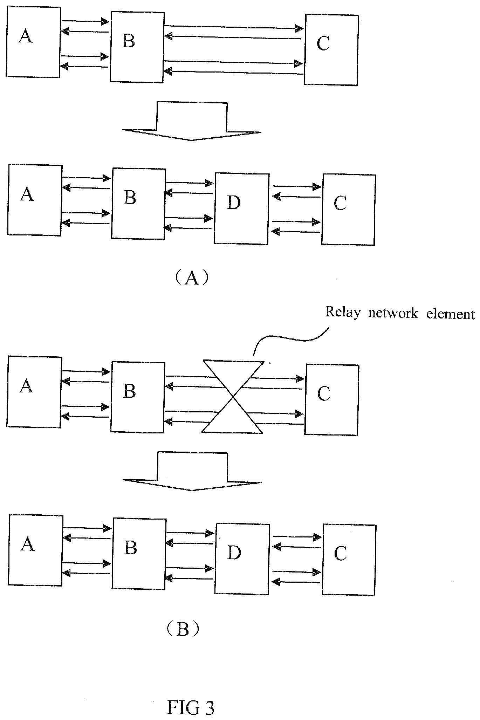

FIG. 3 is a schematic diagram of adding new network element into the link network protected by the multiplexed segment link. Adding new network element usually includes the following kinds of situations: 1) where the network is already in operation in the network, but it originally does not belong to this multiplexed segment link, it is added into this multiplexed segment link by way of adding new single board, changing the single board or utilizing the originally reserved optical port; 2) where the network element is already in operation in the network, but it originally belongs to the relay network element; 3) where the new network element is added. In FIG.3 (A), the network element D belongs to the situations of 1) and 3); while the (B) belongs to the situation described in 2). The present invention is applicable to all the above situations.

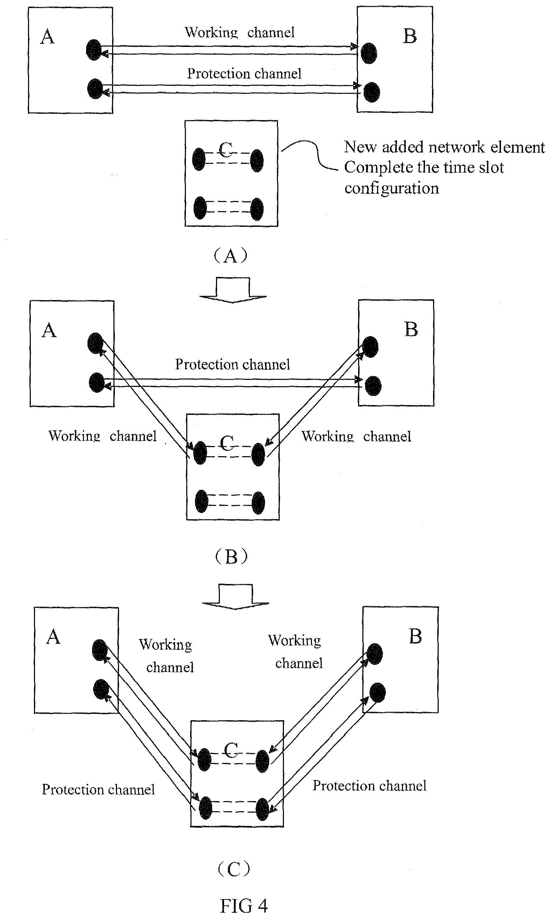

FIG. 4 is a schematic diagram of the capacity expansion of link network with the multiplexed segment link 1+1 protection method. Hereunder the specific process of implementation of the present invention in network with the multiplexed segment link 1+1 protection is described in detail.

First of all, according to the capacity expansion demand, determine the optical fiber connection relationship among the new added network element C and the network element A and the network element B at the network management level, i.e. the connection relationship among the board card of the new added network element C, the optical port and the two neighboring network elements A and B. Then, based on the transmission situation of the services in the optical fiber of the original segment between the network element A and network element B, configure the time slots of services of the network element C, which are all direct time slots from the optical port on the direction in which the network element C neighboring with the network element A to the optical port on the direction in which the network element C neighboring with the network element B; then, distribute to the network element C, as is shown in FIG. 4 (A).

Then, when the network management level issues network managing commands, such as the compulsory rearrangement or manual rearrangement, so as to rearrange the service of the working channel between the network element A and B to the protection channel. If the rearrangement fails, then end this capacity expansion process. In case the rearrangement is successful, then reconfigure the optical fiber where the working channel between the network element A<->B is located to the two new optical connections of the network element A<->C and C<->B, here, the working channel between the network element A and B have completed the capacity expansion into the working channels between the network element A and network element C, and between the network element C and the network element B. Then, delete the rearrangement command issued by the network management, and rearrange the services between the network element A<->B from the protection channel back to the working channel whose capacity has been expanded, as is shown in FIG.4 (B).

Reconfigure the optical fiber where the protection channel between the network element A<->B is located to two new optical connections for the network element A<->C and C<->B. Then, according to the connection situation among the network element C and the network element A and B, conduct the protection configuration and other relevant configuration of the network element C at the network management level, as is shown in FIG.4 (C). Thus, the capacity expansion process ends.

From the operation steps described above, it can be learnt that the capacity expansion of the protection channel between the network element A<->B has been arranged at the end of the process, that is because during the process of the capacity expansion of the working channel between the network element A and B to the new working channels between the network element A and C and between the network element C and B, the protection channel is carrying the services originally carried by the working channel between A and B, in order to ascertain that there is no service interruption; the distribution of the configuration of the time slots of services of the network element C is completed before the service rearrangement, so that at the time of upgrading the protection channel at the end, although the services are rearranged from the protection channel back to the working channel, the service would not be interrupted.

Besides, in the above embodiment, the step for protection configuration as well as other relevant configuration is conducted at the end, which in fact can also be conducted after the step for the configuration of the service time slots of the network element C, because the multiplexed segment link protection protocol does not need to know the identification of network element of each other, and such operation will not affect the protection rearrangement in the process of capacity expansion.

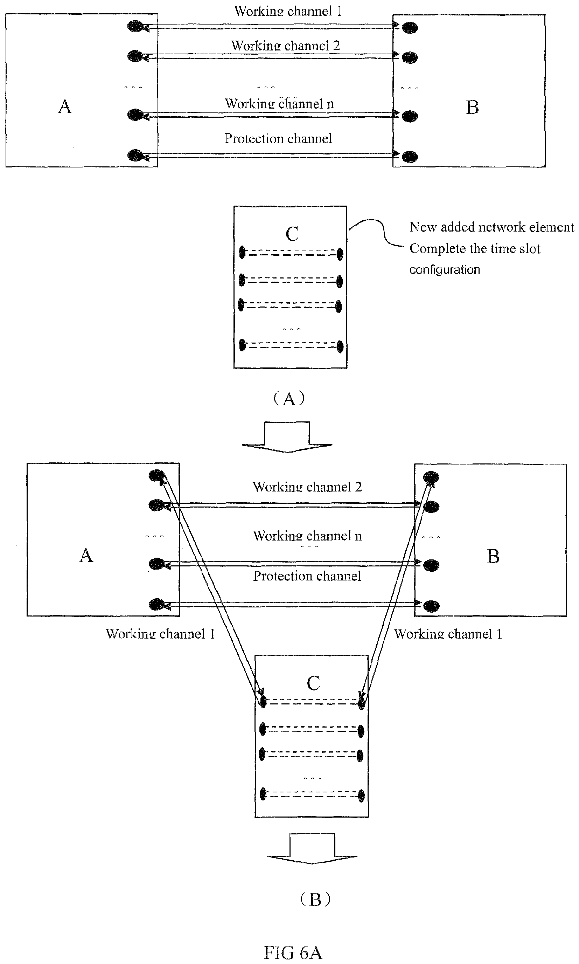

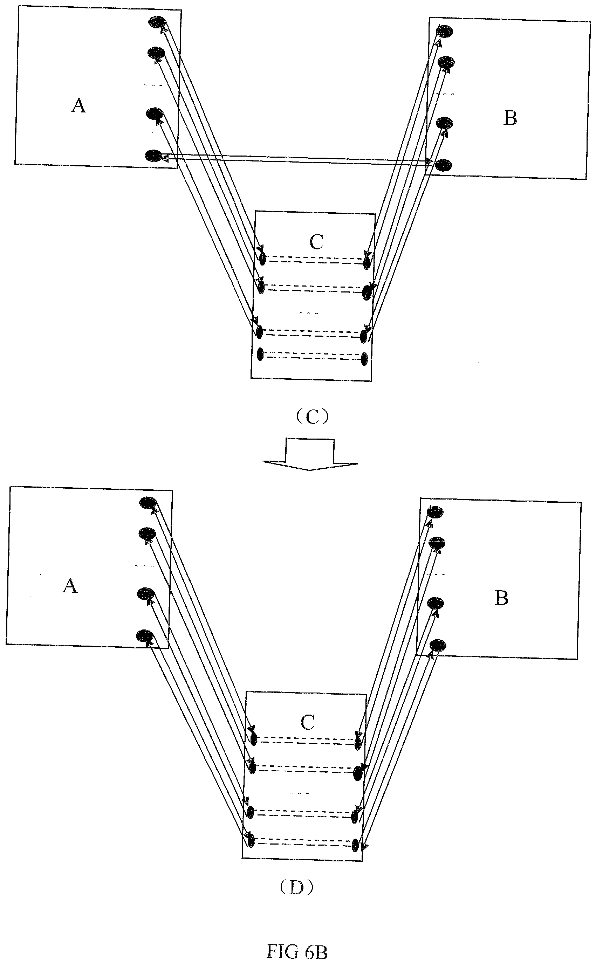

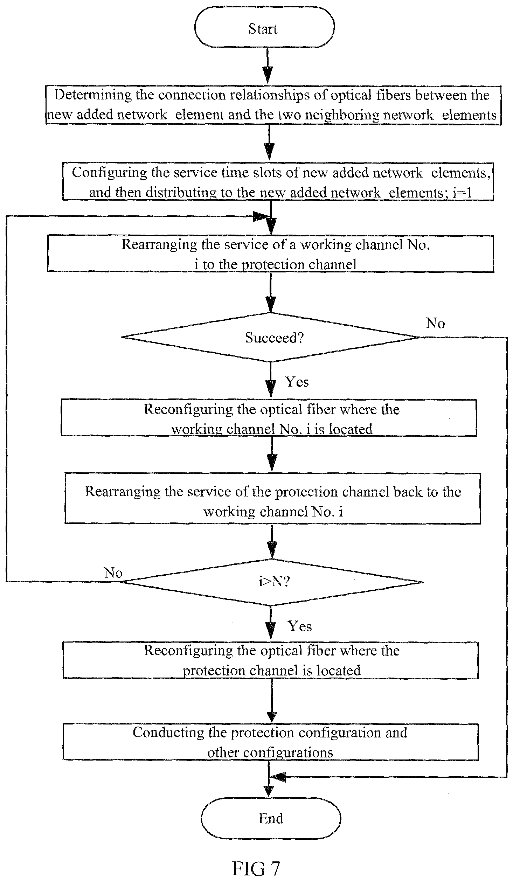

FIG. 6A and 6B are schematic diagrams of the capacity expansion of link network with the multiplexed segment link 1:N protection method, wherein a new network element C needs to be added between the network element A and B; FIG. 7 is a flow chart of the capacity expansion of link network with the multiplexed segment link 1:N protection method. Hereunder the specific operation process of the present invention for the network with the multiplexed segment link 1:N protection method is described in detail.

First of all, according to the capacity expansion demand, determine the optical fiber connection relationship among the new added network element C and network element A and unit B at the network management level, i.e. the connection relationship among the board card and the optical port of the new added network element C and the two neighboring network elements A and B. Then, based on the transmission situation of the optical fiber services in the original segment between the network element A and network element B, configure the time slots of services of the network element C, which are all direct time slots from the optical port on the direction in which the network element C neighboring with the network element A to the optical port on the direction of the network element C neighboring with the network element B; then, distribute to the network element C, as is shown in (A) of FIG. 6A.

The network management level issues network control commands, such as the compulsory rearrangement or manual rearrangement, so as to rearrange the service of the working channel with the designated number between the network element A and B to the protection channel, and record the number of the present working channel. If the rearrangement fails, then end this capacity expansion process. In case the rearrangement is successful, then reconfigure the optical fiber where the working channel with the designated number between the network element A<->B is located to the two new optical connections of the network element A<->C and C<->B, thus, the working channel with the designated number between the network element A and B have completed the capacity expansion into the working channels between the network element A and network element C, and between the network element C and the network element B. Then, delete the rearrangement command issued by the network management, and rearrange the services between the network element A<->B from the protection channel back to the working channel with the designated number.

Check whether there is still any working channel for capacity expansion between the network element A and B, if there is, then repeatedly perform the above steps of service rearrangement, reconfiguration of optical fibers and rearrangement back of service, so as to expand the capacity for all working channels, as is shown in (B) of FIG.6A and (C) of FIG.6B.

Reconfigure the optical fiber where the protection channel between the network element A<->B is located to two new optical connections for the network element A<->C and C<->B. Then, according to the connection situation among the network element C and the network element A and B, conduct the protection configuration and other relevant configuration of the network element C at the network management level, as is shown in FIG.6(D). Thus, the capacity expansion process ends.

From the above described operation steps, it can be learnt that all the capacity expansions to the N working channels in the present embodiment are conducted in the sequence of first rearrangement and then capacity expansion. The capacity expansion of the protection channel between the network element A<->B has been arranged at the end of the process, that is because during the process of the capacity expansion of the working channel between the network element A and B to the new working channels between the network element A and C and between the network element C and B, the protection channel is carrying the services originally carried by the working channel between A and B, in order to ascertain that there is no service interruption; the distribution for the configuration of the time slots of services of the network element C is completed before the service rearrangement, so that at the time of upgrading the protection channel at the end, although the services are rearranged from the protection channel to the working channel, the service would not be interrupted.

In the same way, the step of protection configuration and other relevant configuration is conducted at the end of the process, which in fact can also be taken after the step of the configuration of service time slots of the network element C.

## Claims

1. A capacity expansion method for optical transmission link network without service interruption, which is **characterized in that** it comprises: configuring service time slots of new added network element in advance of service rearranging, and rearranging services of a working channel to a protection channel, then reconfiguring optical fibers of the working channel to the new added network element, and rearranging the services from the protection channel back to the working channel, and finally reconfiguring the optical fiber of the protection channel to the new added network element.

2. The capacity expansion method for optical transmission link network without service interruption according to Claim 1, **characterized in that** said method comprises:
Step 1: according to requirements of capacity expansion, determining the connection relationships of optical fibers between the new added network element and two neighboring network elements in a segment for capacity expansion;
Step 2: according to the transmission relationship of all optical fiber services of the segment for capacity expansion, configuring service time slots for the new added network element, and then distributing to the new added network element;
Step 3: rearranging the service transmitted in a working channel in the segment for capacity expansion to the protection channel;
Step 4: after confirming the correct rearrangement, reconfiguring the optical fiber of the working channel where the service rearrangement is conducted to the optical connection composed of the new added network element and the two neighboring network elements, which forms a new working channel;
Step 5: rearranging the service of the protection channel to the new working channel;
Step 6: in case that the link network adopts the multiplexed segment 1:N protection and N>1, repeatedly performing Step 3 to Step 5 on other working channel until the performances on all the working channels have been completed;
Step 7: reconfiguring the optical fiber of the protection channel to the optical connection composed of the new added network element and the two neighboring network elements;
Step 8: according to the connection relationship between the new added network element and the neighboring network elements, conducting the protection configuration and other relevant configuration for the new added network element.

3. The capacity expansion method for optical transmission link network without service interruption according to Claim 1, **characterized in that** the said method comprises:
Step 1: according to requirements of capacity expansion, determining the connection relationships of optical fibers between the new added network element and two neighboring network elements in a segment for capacity expansion;
Step 2: according to the transmission relationship of all optical fiber services of the segment for capacity expansion, configuring service time slots for the new added network element, and then distributing to the new added network element;
Step 3: according to the connection relationship between the new added network element and the neighboring network elements, conducting the protection configuration and other relevant configurations for the new added network element;
Step 4: rearranging the service transmitted in a working channel in the segment for capacity expansion to the protection channel;
Step 5: after confirming the correct rearrangement, reconfiguring the optical fiber of the working channel where the service rearrangement is conducted to the optical connection composed of the new added network element and the two neighboring network elements, which forms a new working channel;
Step 6: rearranging the service of the protection channel to the new working channel;
Step 7: in case that the link network adopts the multiplexed segment 1:N protection and N>1, repeatedly performing Step 4 to Step 6 on other working channel until the performances on all the working channels have been completed;
Step 8: reconfiguring the optical fiber where the protection channel is located to the optical connection composed of the new added network element and the two neighboring network elements.

4. The capacity expansion method for optical transmission link network without service interruption according to Claim 2 or 3, **characterized in that** the connection relationships of the optical fiber between the new added network element and the two neighboring network elements in the segment for capacity expansion in Step 1 indicates the connection relationship between board card and optical ports of the new added network element and the two neighboring network elements.

5. The capacity expansion method for optical transmission link network without service interruption according to Claim 2 or 3, **characterized in that** the service time slots configured for the new added network element in Step 2 are direct time slots.

6. The capacity expansion method for optical transmission link network without service interruption according to Claim 2 or 3, **characterized in that** in case that the optical transmission link network adopts the multiplexed segment link 1:N protection mode, and N>1, then at the time of rearranging of services transmitted by the working channel in the segment for capacity expansion to the protection channel, designate the number of the working channel and record it.

7. The capacity expansion method for optical transmission link network without service interruption according to Claim 2 or 3, **characterized in that** if the service of the working channel cannot be rearranged to the protection channel correctly, then end the capacity expansion operation.

## Patentansprüche

1. Kapazitätsausdehnungsverfahren für ein Verbindungsnetzwerk mit optischer Übertragung ohne Dienstleistungsunterbrechung, das **dadurch gekennzeichnet ist, dass** es umfasst:
Konfigurieren von Dienstleistungszeitfenstern für ein neu hinzugefügtes Netzwerkelement vor einer Dienstleistungs-Neuordnung und Neuordnen der Dienstleistungen eines Arbeitskanals zu einem Schutzkanal, dann Neukonfigurieren der optischen Fasern des Arbeitskanals zu dem neu hinzugefügten Netzwerkelement und Neuanordnen der Dienstleistungen von dem Schutzkanal zurück zu dem Arbeitskanal und letztlich Neukonfigurieren der optischen Faser des Schutzkanals zu dem neu hinzugefügten Netzwerkelement.

2. Kapazitätsausdehnungsverfahren für ein Verbindungsnetzwerk mit optischer Übertragung ohne Dienstleistungsunterbrechung nach Anspruch 1, **dadurch gekennzeichnet, dass** das Verfahren umfasst:
Schritt 1: entsprechend den Anforderungen der Kapazitätsausdehnung, Bestimmen der Verbindungsbeziehungen der optischen Fasern zwischen dem neu hinzugefügten Netzwerkelement und zwei benachbarten Netzwerkelementen in einem Segment zur Kapazitätsausdehnung;
Schritt 2: entsprechend der Übertragungsbeziehung aller optischen Faserdienstleistungen des Segments zur Kapazitätsausdehnung, Konfigurieren der Dienstleistungszeitfenster für das neu hinzugefügte Netzwerkelement und dann Verteilen an das neu hinzugefügte Netzwerkelement;
Schritt 3: Neuanordnen der Dienstleistung, die in einem Arbeitskanal in dem Segment für die Kapazitätsausdehnung übertragen wird, auf den Schutzkanal;
Schritt 4: nach Bestätigung der richtigen Neuanordnung, Neukonfigurieren der optischen Faser des Arbeitskanals, in dem die Dienstleistungs-Neuanordnung ausgeführt wird, hin zu der optischen Verbindung, die aus dem neu hinzugefügten Netzwerkelement und den zwei benachbarten Netzwerkelementen zusammengesetzt ist, die einen neuen Arbeitskanal bilden;
Schritt 5: Neuanordnen der Dienstleistung des Schutzkanals auf den neuen Arbeitskanal;
Schritt 6: in dem Fall, dass das Verbindungsnetzwerk einen multiplexten Segment-1:N-Schutz annimmt und N≥1 ist, wiederholtes Ausführen von Schritt 3 bis zu Schritt 5 in einem weiteren Arbeitskanals bis die Leistung aller Arbeitskanäle vollständig ist;
Schritt 7: Neukonfigurieren der optischen Faser des Schutzkanals zu der optischen Verbindung, die aus dem neu hinzugefügten Netzwerkelement und den zwei benachbarten Netzwerkelementen zusammengesetzt ist;
Schritt 8: entsprechend der Verbindungsbeziehung zwischen dem neu hinzugefügten Netzwerkelement und dem benachbarten Netzwerkelementen, Durchführen der Schutzkonfiguration und weiterer relevanter Konfiguration für das neu hinzugefügte Netzwerkelement.

3. Kapazitätsausdehnungsverfahren für ein Verbindungsnetzwerk mit optischer Übertragung ohne Dienstleistungsunterbrechung nach Anspruch 1, **dadurch gekennzeichnet, dass** das Verfahren umfasst:
Schritt 1: entsprechend den Anforderungen der Kapazitätsausdehnung, Bestimmen der Verbindungsbeziehungen der optischen Fasern zwischen dem neu hinzugefügten Netzwerkelement und zwei benachbarten Netzwerkelementen in einem Segment zur Kapazitätsausdehnung;
Schritt 2: entsprechend der Übertragungsbeziehung aller optischen Faserdienstleistungen des Segments zur Kapazitätsausdehnung, Konfigurieren der Dienstleistungszeitfenster für das neu hinzugefügte Netzwerkelement und dann Verteilen an das neu hinzugefügte Netzwerkelement;
Schritt 3: entsprechend der Verbindungsbeziehung zwischen dem neu hinzugefügten Netzwerkelement und dem benachbarten Netzwerkelementen, Durchführen der Schutzkonfiguration und weiterer relevanter Konfiguration für das neu hinzugefügte Netzwerkelement;
Schritt 4: Neuanordnen der Dienstleistung, die in einem Arbeitskanal in dem Segment für die Kapazitätsausdehnung übertragen wird, auf den Schutzkanal;
Schritt 5: nach Bestätigung der richtigen Neuanordnung, Neukonfigurieren der optischen Faser des Arbeitskanals, in dem die Dienstleistungs-Neuanordnung ausgeführt wird, hin zu der optischen Verbindung, die aus dem neu hinzugefügten Netzwerkelement und den zwei benachbarten Netzwerkelementen zusammengesetzt ist, die einen neuen Arbeitskanal bilden;
Schritt 6: Neuanordnen der Dienstleistung des Schutzkanals auf den neuen Arbeitskanal;
Schritt 7: in dem Fall, dass das Verbindungsnetzwerk einen multiplexten Segment-1:N-Schutz annimmt und N≥1 ist, wiederholtes Ausführen von Schritt 4 bis zu Schritt 6 in einem weiteren Arbeitskanals bis die Leistung aller Arbeitskanäle vollständig ist;
Schritt 8: Neukonfigurieren der optischen Faser des Schutzkanals zu der optischen Verbindung, die aus dem neu hinzugefügten Netzwerkelement und den zwei benachbarten Netzwerkelementen zusammengesetzt ist.

4. Kapazitätsausdehnungsverfahren für ein Verbindungsnetzwerk mit optischer Übertragung ohne Dienstleistungsunterbrechung nach den Ansprüchen 2 oder 3, **dadurch gekennzeichnet, dass** die Verbindungsbeziehungen der optischen Faser zwischen dem neu hinzugefügten Netzwerkelement und den zwei benachbarten Netzwerkelementen in dem Segment zur Kapazitätsausdehnungg im Schritt 1 die Verbindungsbeziehung zwischen einer Bordkarte und optischen Anschlüssen des neu hinzugefügten Netzwerkelements und den zwei benachbarten Netzwerkelementen angibt.

5. Kapazitätsausdehnungsverfahren für ein Verbindungsnetzwerk mit optischer Übertragung ohne Dienstleistungsunterbrechung nach Anspruch 2 oder 3, **dadurch gekennzeichnet, dass** die Dienstleistungszeitfenster, die in Schritt 2 für das neu hinzugefügte Netzwerkelement ausgestaltet sind, direkte Zeitfenster sind.

6. Kapazitätsausdehnungsverfahren für ein Verbindungsnetzwerk mit optischer Übertragung ohne Dienstleistungsunterbrechung nach Anspruch 2 oder 3, **dadurch gekennzeichnet, dass** das Verbindungsnetzwerk mit optischer Übertragung den Modus mit multiplextem Segment-1:N-Schutz annimmt und N≥1 ist, dann zur Zeit der Neuanordnung von Dienstleistungen, die durch den Arbeitskanal in den Segment zur Kapazitätsausdehnung übertragen werden, zu dem Schutzkanal die Nummer des Arbeitskanals bestimmt und aufgezeichnet wird.

7. Kapazitätsausdehnungsverfahren für ein Verbindungsnetzwerk mit optischer Übertragung ohne Dienstleistungsunterbrechung nach Anspruch 2 oder 3, **dadurch gekennzeichnet**, wenn die Dienstleistung des Arbeitskanals auf den Schutzkanal nicht richtig neu angeordnet werden kann, der Kapazitätsausdehnungsbetrieb beendet wird.

## Revendications

1. Procédé d'augmentation de capacité pour un réseau de liaisons de transmission optique sans interruption de service, qui est **caractérisé en ce qu'**il comprend : la configuration de créneaux temporels de service d'un élément de réseau nouvellement ajouté préalablement à un réagencement de services, et le réagencement de services d'un canal de travail à un canal de protection, ensuite la reconfiguration de fibres optiques du canal de travail vers l'élément de réseau nouvellement ajouté, et le réagencement des services du canal de protection de nouveau vers le canal de travail, et finalement la reconfiguration de la fibre optique du canal de protection vers l'élément de réseau nouvellement ajouté.

2. Procédé d'augmentation de capacité pour un réseau de liaisons de transmission optique sans interruption de service selon la revendication 1, **caractérisé en ce que** ledit procédé comprend :
étape 1 : selon des exigences d'augmentation de capacité, la détermination des relations de connexion de fibres optiques entre l'élément de réseau nouvellement ajouté et deux éléments de réseau voisins dans un segment pour augmentation de capacité ;
étape 2 : selon la relation de transmission de tous les services de fibre optique du segment pour augmentation de capacité, la configuration de créneaux temporels de service pour l'élément de réseau nouvellement ajouté, et ensuite la distribution à l'élément de réseau nouvellement ajouté ;
étape 3 : le réagencement du service transmis dans un canal de travail dans le segment pour augmentation de capacité au canal de protection ;
étape 4 : après la confirmation du réagencement correct, la reconfiguration de la fibre optique du canal de travail où le réagencement de service est effectué vers la connexion optique composée de l'élément de réseau nouvellement ajouté et des deux éléments de réseau voisins, ce qui forme un nouveau canal de travail ;
étape 5 : le réagencement du service du canal de protection vers le nouveau canal de travail ;
étape 6 : dans le cas où le réseau de liaison adopte la protection 1:N de segment multiplexé et N > 1, la réalisation de manière répétitive de l'étape 3 à l'étape 5 sur un autre canal de travail jusqu'à ce que les performances sur tous les canaux de travail aient été accomplies ;
étape 7 : la reconfiguration de la fibre optique du canal de protection vers la connexion optique composée de l'élément de réseau nouvellement ajouté et des deux éléments de réseau voisins ;
étape 8 : selon la relation de connexion entre l'élément de réseau nouvellement ajouté et les éléments de réseau voisins, le fait d'effectuer la configuration de protection et une autre configuration pertinente pour l'élément de réseau nouvellement ajouté.

3. Procédé d'augmentation de capacité pour un réseau de liaisons de transmission optique sans interruption de service selon la revendication 1, **caractérisé en ce que** ledit procédé comprend :
étape 1 : selon des exigences d'augmentation de capacité, la détermination des relations de connexion de fibres optiques entre l'élément de réseau nouvellement ajouté et deux éléments de réseau voisins dans un segment pour augmentation de capacité ;
étape 2 : selon la relation de transmission de tous les services de fibre optique du segment pour augmentation de capacité, la configuration de créneaux temporels de service pour l'élément de réseau nouvellement ajouté, et ensuite la distribution à l'élément de réseau nouvellement ajouté ;
étape 3 : selon la relation de connexion entre l'élément de réseau nouvellement ajouté et les éléments de réseau voisins, le fait d'effectuer la configuration de protection et d'autres configurations pertinentes pour l'élément de réseau nouvellement ajouté ;
étape 4 : le réagencement du service transmis dans un canal de travail dans le segment pour augmentation de capacité vers le canal de protection ;
étape 5 : après la confirmation du réagencement correct, la reconfiguration de la fibre optique du canal de travail où le réagencement de service est effectué vers la connexion optique composée de l'élément de réseau nouvellement ajouté et des deux éléments de réseau voisins, ce qui forme un nouveau canal de travail ;
étape 6 : le réagencement du service du canal de protection vers le nouveau canal de travail ;
étape 7 : dans le cas où le réseau de liaison adopte la protection 1:N de segment multiplexé et N > 1, la réalisation de manière répétitive de l'étape 4 à l'étape 6 sur un autre canal de travail jusqu'à ce que les performances sur tous les canaux de travail aient été accomplies ;
étape 8 : la reconfiguration de la fibre optique où le canal de protection est situé vers la connexion optique composée de l'élément de réseau nouvellement ajouté et des deux éléments de réseau voisins.

4. Procédé d'augmentation de capacité pour un réseau de liaisons de transmission optique sans interruption de service selon la revendication 2 ou 3, **caractérisé en ce que** les relations de connexion de la fibre optique entre l'élément de réseau nouvellement ajouté et les deux éléments de réseau voisins dans le segment pour augmentation de capacité à l'étape 1 indiquent la relation de connexion entre une carte de circuit imprimé et des ports optiques de l'élément de réseau nouvellement ajouté et des deux éléments de réseau voisins.

5. Procédé d'augmentation de capacité pour un réseau de liaisons de transmission optique sans interruption de service selon la revendication 2 ou 3, **caractérisé en ce que** les créneaux temporels de service configurés pour l'élément de réseau nouvellement ajouté à l'étape 2 sont des créneaux temporels directs.

6. Procédé d'augmentation de capacité pour un réseau de liaisons de transmission optique sans interruption de service selon la revendication 2 ou 3, **caractérisé en ce que**, dans le cas où le réseau de liaisons de transmission optique adopte le mode de protection 1:N de liaison de segment multiplexé, et N > 1, alors au moment du réagencement de services transmis par le canal de travail dans le segment pour augmentation de capacité vers le canal de protection, désigner le numéro de canal de travail et l'enregistrer.

7. Procédé d'augmentation de capacité pour un réseau de liaisons de transmission optique sans interruption de service selon la revendication 2 ou 3, **caractérisé en ce que** si le service du canal de travail ne peut pas être réagencé correctement vers le canal de protection, alors finir l'opération d'augmentation de capacité.
